# EUROPEAN PATENT APPLICATION

(11) **EP 3 945 485 A1**
(43) Date of publication of application: **02.02.2022**
(21) Application number: 20305890.4
(22) Date of filing: 31.07.2020
(51) Int. Cl.: G06Q 30/02

(54) **METHOD FOR PREDICTING PRODUCT DATA AND APPARATUS FOR IMPLEMENTING THE SAME**

(71) Applicant: SYMPHONYEYC FRANCE, 75015 Paris (FR)
(72) Inventor: GHIONDA, Anaïs, 75015 Paris (FR); COUSSINET, Cédric, 75015 Paris (FR); WETZEL, Eric, 75015 Paris (FR); HERRY, Sébastien, 75015 Paris (FR)
(74) Representative: Plasseraud IP

(57) **Abstract**

A computer-implemented method of managing product data is proposed, which comprises: generate a first time segment associated with a first product sale feature, the first time segment comprising product sales data related to sales of the product at a point of sale per a first time unit over a first time period in the past starting on a current time and of a first predetermined duration expressed in the first time unit, and one or more second time segments respectively associated with one or more second product sale features, the second time segments each comprising context data associated with product sale history and/or the point of sale over the first time period in the past; combine the first time segment with the one or more second time segments to generate an information vector of product sale features; and generate a prediction of sales for the product at the point of sale based on the output of a prediction model to which the information vector of product sale features is input.

## Description

The present disclosure relates to the field of prediction of product data, in particular prediction of product sales data, which may be used for stock management.

In retail, product stock management typically involves product clustering in order to improve the supply chain management at various points of sale or points of stock. The stock duration during which a product is stored in stock before being sold should be minimized, in particular for fresh products (meat, dairy, fish, etc.). On the other hand, the stock available for a product at a given point of sale should never reach zero-level, so that the stock for each product and each point of sale for the product should be carefully managed, taking into account the lead time and the delivery time for the product at the point of sale.

Algorithms such as Holt-Winters, linear regression, and statistical algorithms have been considered for generating predictions of sales, demands and distributions of products based on profiles of past sales, demands or distribution of such products.

It is an object of the present subject disclosure to provide an improved method for predicting product data and apparatus implementing the same.

Another object of the present subject disclosure is to provide an improved method for predicting product sales data and apparatus implementing the same.

Another object of the present subject disclosure is to provide an improved method for predicting product data and apparatus implementing the same for alleviating the drawbacks and shortcomings of conventional schemes for predicting product sales data.

To achieve these objects and other advantages and in accordance with the purpose of the present subject disclosure, as embodied and broadly described herein, in one aspect of the present subject disclosure, a computer-implemented method of managing product data is proposed, which comprises: generate a first time segment associated with a first product sale feature, the first time segment comprising product sales data related to sales of the product at a point of sale per a first time unit over a first time period in the past starting on a current time and of a first predetermined duration expressed in the first time unit, and one or more second time segments respectively associated with one or more second product sale features, the second time segments each comprising context data associated with product sale history and/or the point of sale over the first time period in the past; combine the first time segment with the one or more second time segments to generate an information vector of product sale features; and generate a prediction of sales for the product at the point of sale based on the output of a prediction model to which the information vector of product sale features is input.

The proposed method advantageously combines product sales data with context data that may be of any type to generate an input data vector which is provided as input to a prediction model for predicting future sales of the product. The proposed scheme for formatting collected data, including product sales data and context data, into an input data vector can advantageously use any type of context data, such as past sales of product data, future sales of product data, weather data (including weather forecast or actual weather over a past period), calendar data (e.g. vacation days, national holiday days, etc.), product families, etc. This flexibility to add data corresponding to various types of context data allows improving the accuracy of the prediction generated by the prediction model.

Further, the use of a prediction model which may implement an artificial intelligence algorithm allows automating the generation of a production, with potentially a massive amount of data provided as input to the model.

In one or more embodiments, the proposed method may further comprise a prediction model qualification phase, the prediction model qualification phase comprising: performing a plurality of prediction model training phases using a plurality of respective candidate prediction models; selecting a candidate prediction model as the prediction model based on results of the prediction model training phases.

In one or more embodiments, the proposed method may further comprise a prediction model training phase, the prediction model training phase comprising: generate a first time series associated with the first product sale feature, the first time series comprising product sales data related to sales of the product at the point of sale per the first time unit (e.g. per week) over a past historic duration expressed in the first time unit (e.g. 156 weeks); generate one or more second time series respectively associated with the one or more second product sale features, the second time series each comprising context data associated with product sale history and/or the point of sale over the past historic duration expressed in the first time unit (e.g. 156 weeks); for each of the first time series and the one or more second time series, generating a sequence of successive time segments, based on respective data of the first time series and the one or more second time series, wherein each time segment corresponds to a time slice of a first predetermined duration expressed in the first time unit (e.g. 20 weeks) in a sequence of successive time slices, wherein an initial time slice of the sequence of time slices starts at an initial time of the past historic duration (in some embodiments expressed in the first time unit), and a last time slice of the sequence of time slices ends at a final time of the past historic duration (in some embodiments expressed in the first time unit), and each time slice of the sequence of time slices but the last time slice is offset to the next time slice in the sequence by one first time unit; running training iterations of a vector generation loop, based on a current time slice which is incremented by an increment (in some embodiments expressed in the first time unit), wherein the vector generation loop is initiated with the current time slice set to the initial time slice of the past historic duration and stopped when the current time slice is set to a predetermined training phase time slice of the past historic duration, the method comprising, for each training iteration: combine a first current time segment corresponding to the first time series with one or more second current time segments to generate a current information input vector of product sale features, wherein the first current time segment and the one or more current time segments correspond to the current time slice; combine a first offset current time segment corresponding to the first time series with one or more second offset current time segments to generate a current information output vector of product sale features, wherein the first current time segment and the one or more current time segments correspond to the current time slice, and wherein the first offset current time segment and the one or more second offset current time segments correspond to a first offset current slice which is offset from the current time slice by a predetermined training offset (in some embodiments expressed in the first time unit); train the prediction model based on the current information input vector of product sale features, and on the current information output vector of product sale features.

In one or more embodiments, the proposed method may further comprise: running test iterations of the vector generation loop, based on a test current time slice which is incremented by a test phase increment (in some embodiments expressed in the first time unit) after each iteration, wherein the vector generation loop is initiated with the test current time slice set to a test initial time slice which is offset from the predetermined training phase time slice by one first time unit and stopped when the test current time slice is set to the last time slice of the sequence of time slices, the method comprising, for each test iteration: combine a third current time segment corresponding to the first time series with one or more fourth current time segments to generate a current information test input vector of product sale features, wherein the third current time segment and the one or more fourth current time segments correspond to the current time slice; combine a third offset current time segment corresponding to the first time series with one or more fourth offset current time segments to generate a current information test output vector of product sale features, wherein the third offset current time segment and the one or more fourth offset current time segments correspond to a second offset current slice which is offset from the test current time slice by a predetermined test offset (in some embodiments expressed in the first time unit); generate a test output of the prediction model by running the prediction model with the current information test input vector of product sale features as input; calculate a test prediction error based on a comparison of the test output of the prediction model with the current information test output vector of product sale features; update the prediction model based on the test prediction error.

In one or more embodiments, the information vector of product sale features may comprise: a first data series of aggregate sales of the product at the point of sale per the first time unit (e.g. per week) over a first time period in the past starting on a current time and of the first predetermined duration (e.g. over the last 20 weeks); a second data series of aggregate sales of the product per a second time unit (e.g. per day) over a second time period in the past starting on the current time and of a second predetermined duration expressed in the second time unit (e.g. over the last 20 days); a first derivative data series of first derivatives of the first data series; a second derivative data series of second derivatives of the first data series; a third derivative data series of first derivatives of the second data series; a fourth derivative data series of second derivatives of the second data series; a third data series of promotions for sale of the product at the point of sale per the first time unit over the first time period in the past starting on the current time (e.g. over the last 20 weeks).

In one or more embodiments, the information vector of product sale features further comprises: a fourth data series of forecast promotions for sale of the product at the point of sale per the first time unit over the first time period in the future from the current time (e.g. over the next 20 weeks).

In one or more embodiments, the information vector of product sale features further comprises: a fifth data series of weather data at the point of sale per the first time unit (e.g. per week) over the first time period in the past starting on the current time (e.g. over the last 20 weeks).

In one or more embodiments, the information vector of product sale features further comprises: a sixth data series of weather data at the point of sale per the first time unit (e.g. per week) over the first time period in the future from the current time (e.g. over the last 20 weeks).

In one or more embodiments, the information vector of product sale features further comprises: a seventh data series of weather data at the point of sale per the second time unit (e.g. per day) over a third time period in the future from the current time and of a third predetermined duration expressed in the second time unit (e.g. over the next 9 days).

In one or more embodiments,the information vector of product sale features further comprises: a eighth data series of calendar data at the point of sale per the first time unit (e.g. per week) over the first time period in the past starting on the current time (e.g. over the last 20 weeks).

In another aspect of the present subject disclosure, an apparatus is proposed, which comprises a processor and a memory operatively coupled to the processor, wherein the apparatus is configured to perform a method according to one or more embodiments of the present subject disclosure.

In yet another aspect of the present subject disclosure, a non-transitory computer-readable medium encoded with executable instructions which, when executed, causes an apparatus comprising a processor operatively coupled with a memory, to perform a method as proposed in the present subject disclosure, is proposed.

For example, in embodiments, the present subject disclosure provides a non-transitory computer-readable medium encoded with executable instructions which, when executed, causes an apparatus comprising a processor operatively coupled with a memory, to manage product data, according to a method which comprises: generate a first time segment associated with a first product sale feature, the first time segment comprising product sales data related to sales of the product at a point of sale per a first time unit over a first time period in the past starting on a current time and of a first predetermined duration expressed in the first time unit, and one or more second time segments respectively associated with one or more second product sale features, the second time segments each comprising context data associated with product sale history and/or the point of sale over the first time period in the past; combine the first time segment with the one or more second time segments to generate an information vector of product sale features; and generate a prediction of sales for the product at the point of sale based on the output of a prediction model to which the information vector of product sale features is input.

In yet another aspect of the present subject disclosure, a computer program product comprising computer program code tangibly embodied in a computer readable medium, said computer program code comprising instructions to, when provided to a computer system and executed, cause said computer to perform a method as proposed in the present subject disclosure, is proposed.

In another aspect of the present subject disclosure, a data set representing, for example through compression or encoding, a computer program as proposed herein, is proposed.

It should be appreciated that the present invention can be implemented and utilized in numerous ways, including without limitation as a process, an apparatus, a system, a device, and as a method for applications now known and later developed. These and other unique features of the system disclosed herein will become more readily apparent from the following description and the accompanying drawings.

### Brief description of the drawings

The present subject disclosure will be better understood and its numerous objects and advantages will become more apparent to those skilled in the art by reference to the following drawings, in conjunction with the accompanying specification, in which:
Figure 1 is a block diagram illustrating an architecture of a computing environment on which the proposed method may be implemented in accordance with one or more embodiments.
Figure 2 is a block schematic diagram illustrating a method of managing product data in accordance with one or more embodiments.
Figure 3 illustrates an exemplary information vector of product sale features according to one or more embodiments.
Figure 4 illustrates an exemplary computing architecture for performing a training phase for training one or more prediction models according to one or more embodiments.
Figure 5A illustrates an exemplary first time series of product sale data synchronized with a second time series of context data in accordance with one or more embodiments.
Figure 5B illustrates an exemplary sequence of overlapping time slices in accordance with one or more embodiments.

### Description of embodiments

For simplicity and clarity of illustration, the drawing figures illustrate the general manner of construction, and descriptions and details of well-known features and techniques may be omitted to avoid unnecessarily obscuring the discussion of the described embodiments of the invention. Additionally, elements in the drawing figures are not necessarily drawn to scale. For example, the dimensions of some of the elements in the figures may be exaggerated relative to other elements to help improve understanding of embodiments of the present invention. Certain figures may be shown in an idealized fashion in order to aid understanding, such as when structures are shown having straight lines, sharp angles, and/or parallel planes or the like that under real-world conditions would likely be significantly less symmetric and orderly. The same reference numerals in different figures denote the same elements, while similar reference numerals may, but do not necessarily, denote similar elements.

In addition, it should be apparent that the teaching herein can be embodied in a wide variety of forms and that any specific structure and/or function disclosed herein is merely representative. In particular, one skilled in the art will appreciate that an aspect disclosed herein can be implemented independently of any other aspects and that several aspects can be combined in various ways.

The present disclosure is described below with reference to functions, engines, block diagrams and flowchart illustrations of the methods, systems, and computer program according to one or more exemplary embodiments. Each described function, engine, block of the block diagrams and flowchart illustrations can be implemented in hardware, software, firmware, middleware, microcode, or any suitable combination thereof. If implemented in software, the functions, engines, blocks of the block diagrams and/or flowchart illustrations can be implemented by computer program instructions or software code, which may be stored or transmitted over a computer-readable medium, or loaded onto a general purpose computer, special purpose computer or other programmable data processing apparatus to produce a machine, such that the computer program instructions or software code which execute on the computer or other programmable data processing apparatus, create the means for implementing the functions described herein.

Embodiments of computer-readable media includes, but are not limited to, both computer storage media and communication media including any medium that facilitates transfer of a computer program from one place to another. As used herein, a "computer storage media" may be any physical media that can be accessed by a computer or a processor. In addition, the terms « memory » and « computer storage media" include any type of data storage device, such as, without limitation, a hard drive, a flash drive or other flash memory devices (e.g. memory keys, memory sticks, key drive), CD-ROM or other optical storage, DVD, magnetic disk storage or other magnetic storage devices, memory chip(s), Random Access Memory (RAM), Read-Only-Memory (ROM), Electrically-erasable programmable read-only memory (EEPROM), smart cards, or any other suitable medium that can be used to carry or store program code in the form of instructions or data structures which can be read by a computer processor, or a combination thereof. Also, various forms of computer-readable media may transmit or carry instructions to a computer, including a router, gateway, server, or other transmission device, wired (coaxial cable, fiber, twisted pair, DSL cable) or wireless (infrared, radio, cellular, microwave). The instructions may comprise code from any computer-programming language, including, but not limited to, assembly, C, C++, Python, Visual Basic, SQL, PHP, and JAVA.

Unless specifically stated otherwise, it will be appreciated that throughout the following description discussions utilizing terms such as processing, computing, calculating, determining, or the like, refer to the action or processes of a computer or computing system, or similar electronic computing device, that manipulate or transform data represented as physical, such as electronic, quantities within the registers or memories of the computing system into other data similarly represented as physical quantities within the memories, registers or other such information storage, transmission or display devices of the computing system.

The terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

Additionally, the word "exemplary" is used herein to mean "serving as an example, instance, or illustration". Any embodiment or design described herein as "exemplary" is not necessarily to be construed as preferred or advantageous over other embodiments or designs.

In the following description and claims, the terms "coupled" and "connected", along with their derivatives, may be indifferently used to indicate that two or more elements are in direct physical or electrical contact with each other, or two or more elements are not in direct contact with each other, but yet still co-operate or interact with each other.

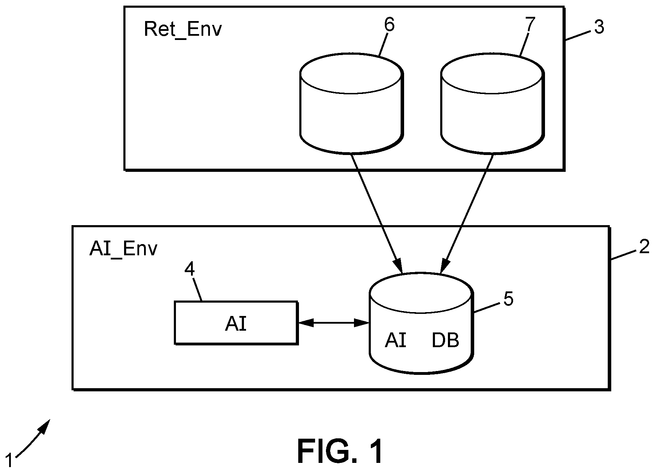

Shown on Fig. 1 is a computing environment 1 for implementing the proposed methods in one or more embodiments. The computing environment 1 comprises an artificial intelligence (AI) computing environment 2 (AI_Env), in which the proposed methods may be implemented in one or more embodiments, operatively coupled to a user computing environment 3 (Ret_Env), which will be typically hosted at a user's premises or at a computing service provider of the user. Depending on the embodiment, the AI computing environment 2 may also be hosted at a user's premises, in the Cloud (for example in cases where the proposed solution is provided as a Software as a Service (SaaS) solution), or at the premises of the provider of the proposed solution.

In one or more embodiments, the AI computing environment 2 may comprise an AI processing unit 4 operatively connected to an AI database 5. The user environment 3 may comprise a user database 6 and a so-called data transition database 7.

In one or more embodiments, the AI computing environment 2 may be configured for data communication with the user computing environment 3 through the user database 6 and the transition database 7 being configured for providing data to the AI database for populating the AI database in order to implement the proposed methods.

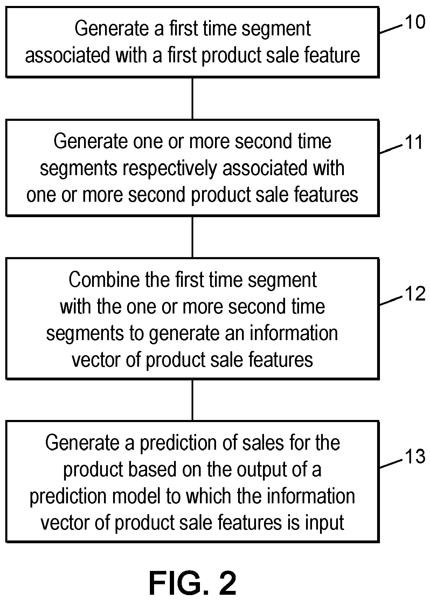

Fig. 2 is a block schematic diagram of a method of managing product data according to one or more embodiments of the present subject disclosure.

Referring also to figure 1, the AI processing unit 4 may be configured to generate 10 a first time segment associated with a first product sale feature, the first time segment comprising product sales data related to sales of the product at a point of sale per a first time unit over a first time period in the past starting on a current time. The first time segment may be of a first predetermined duration which may be expressed in the first time unit. For example, the first time unit may be a week, and the first predetermined duration may be expressed in weeks (e.g. 20 weeks).

The AI processing unit 4 may also be configured to generate 11 one or more second time segments respectively associated with one or more second product sale features, the second time segments each comprising context data associated with product sale history and/or the point of sale over the first time period in the past. The one or more second time segments may be generated so that they correspond to a time duration corresponding to that of the first time segment. For example, the first time segment and the one or more second time segment may be generated for a time period of a predetermined number of weeks (e.g. 20 weeks).

In one or more embodiments, the generation of the first time segment and the one or more second time segments may be performed as part or as a result of a data collection phase.

The data collection phase may include a collection of product sales data related to sales of a product of interest at one or more points of sale of interest, for example from data stored at user environment, such as the one illustrated on Fig. 1. In one or more embodiments, the data collection phase related to product sales data may comprise collecting a sales history (typically over the first time period, e.g. 20 weeks) of one or more products that were offered for sale in the past (comprising the first time period) and are currently offered for sale at one or more points of sale of interest. The first time segment may then be generated based on data related to product sales data collected during the data collection phase.

In one or more embodiments, the data collection phase may further include a collection of context data associated with product sales data related to sales of a product of interest at the one or more points of sale of interest (typically comprising the first time period, e.g. the past 20 weeks) and/or context data associated with the one or more points of sale of interest, in both cases for example from data stored at user environment, such as the one illustrated on Fig. 1.

In one or more embodiments, the data collection phase related to context data associated with product sales data may comprise collecting contextual data for the one or more points of sale of interest over the sales history (typically comprising the first time period, e.g. the past 20 weeks) of the one or more products offered for sale during the first time period and currently offered for sale at the one or more points of sale of interest.

In one or more embodiments, the collecting contextual data may comprise collecting actual weather data over the first time period at one or more of the points of sale of interest, and/or weather forecast data over the first time period at one or more of the points of sale of interest.

In one or more embodiments, the collecting contextual data may comprise collecting data related to time periods (in the past (typically comprising the first time period), present and/or future) during which the product is on sale and/or during which a discount is offered on the product, at one or more of the points of sale of interest.

In one or more embodiments, the collecting contextual data may comprise collecting social and/or economic data related to sale of the product at one or more of the points of sale of interest. For example, at some of the points of sale of interest, a sale of the product may involve the use of coupons by the customer. As another example, information related to government or public institution subsidized purchases, possibly including a subsidized purchase amount and/or a date at which government help is expected, may be collected as context data related to sale of the product at one or more of the points of sale of interest.

In one or more embodiments, the collecting contextual data may comprise collecting local calendar data, for the past (typically over the first time period) and/or the future at one or more of the points of sale of interest. For example, data indicating that one or more days during the first time period are national holidays or days during which one or more points of sale may likely be closed may be collected as contextual data.

In one or more embodiments, the data collection phase related to context data associated with the one or more points of interest may comprise collecting related to geographical coordinates of the one or more points of sale of interest.

In one or more embodiments, each type of collected context data (such as the ones described above) may lead to generating a distinct second time segment over the first time period, so that the one or more second time segments that may be generated may each correspond to a respective type of context data.

In one or more embodiments, the data collection phase may be followed by a data pre-processing phase of the collected data. In some embodiments, the pre-processing of collected data may comprise the removing, from the first data segment and/or from the one or more second data segments, data related to products which show no sale activity during a predetermined time period (for example corresponding to the first time period or a portion thereof). In some embodiments, the pre-processing of collected data may comprise the structuring product sales data on calendar years. Such structuring may in some embodiments involve the reconstructing of data (e.g. using interpolation) in cases where data sale history is incomplete.

In one or more embodiments, the collected data may be processed to generate respective time series of product sales data and contextual data, that is product sales data or contextual data each associated with timestamp data corresponding thereto. The time stamp data may be expressed in one or more time units, such as for example, in days and/or weeks.

The respective time series may be processed to time-synchronize the timestamped product sale data and timestamped contextual data, generate the first time segment from the time-synchronized timestamped product sale data, and generate the one or more second time segments from the time-synchronized timestamp contextual data.

The Al processing unit 4 may further be configured to, once the first time segment and the one or more time segments have been generated, combine 12 the first time segment with the one or more second time segments to generate an information vector of product sale features.

Referring to Fig. 1, the generated information vectors of product sale features may be stored by the AI processing unit 4 in the AI database 5 of the AI computing environment 2.

In one or more embodiments, the first time segment and the one or more second time segments may be combined based on the timestamps associated with data contained therein to generate the information vector of product sale features. For example, an information vector of product sale features corresponding to a first time period of a predetermined number N weeks may be generated by combining, for each of the N weeks, the product sales data contained in the first time segment with the contextual data contained in the respective one or more second time segments. The resulting information vector of product sale features may then comprise, for each week of the N weeks of the first time period, product sales data and contextual data corresponding to the same week of the first time period.

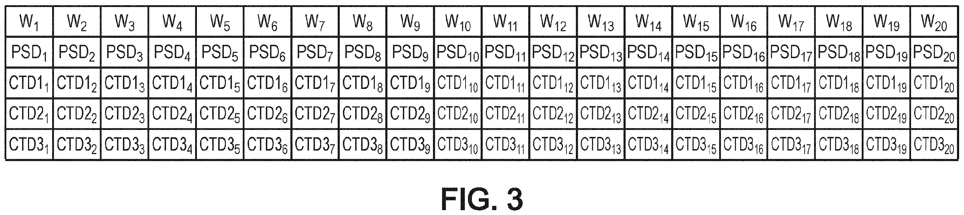

Figure 3 illustrates an exemplary information vector of product sale features according to one or more embodiments. The information vector of product sale features illustrated on Fig. 3 spans a time period of 20 time units (in the illustrated example 20 weeks) in a time series (*Wₖ*)_{*k*=1*...*20}, where for example *W*₁ may correspond to a reference time unit (for example taken as the current week or the week preceding the current week), and *W*₂₀ may correspond to data of 20 time units (which may be days or weeks, depending on each time series) in the past based on the reference time unit. As illustrated on Fig. 3, the information vector of product sale features may also include first product sale features such as a first time segment (*PSDₖ*)_{*k*=1...20} comprising, for each time unit *Wₖ*, product sales data *PSDₖ* related to sales of one or more products of interest at one or more points of sale of interest, second product sales features such as a second time segment (*CTD*1*ₖ*)_{*k*=1...20} comprising, for each time unit *Wₖ*, context data *CTD*1*ₖ* associated to product sale history of the one or more products of interest and/or the one or more points of sale of interest, third product sales features such as a third time segment *(CTD2ₖ*)_{*k*=1...20} comprising, for each time unit *Wₖ*, context data *CTD*2*ₖ* associated to product sale history of the one or more products of interest and/or the one or more points of sale of interest, and fourth product sales features such as a fourth time segment (*CTD*3*ₖ*)_{*k*=1...20} comprising, for each time unit *Wₖ*, context data *CTD*3*ₖ* associated to product sale history of the one or more products of interest and/or the one or more points of sale of interest.

Depending on the embodiment, the product sales features used as context data may include one or more of the following features, in addition to the first time segment comprising one or more time series of cumulative sales of the one or more products of interest for each time unit over the last N number of time units (depending on the time series, the time unit used may be for example one day or one week), where N is an integer:
- First-order derivatives of one or more of the time series of cumulative sales of the one or more products of interest;
- Second-order derivatives of one or more of the time series of cumulative sales of the one or more products of interest;
- Commercial sales, discounts, or price reductions on the one or more products of interest over the last N time units;
- Planned future sales or price reductions on the one or more products of interest over a predetermined M number of time units in the future (M may for example be chosen equal to N);
- Data related to weather at the one or more points of interest over the last N time units;
- Data related to weather at the one or more points of interest over a predetermined M number of time unitss in the future (M may for example be chosen equal to N);
- Data related to weather at the one or more points of interest over a predetermined P number of days in the future (P may for example be chosen equal to 9);
- Data related to calendar at the one or more points of interest (including for example national holidays, school vacation, etc.);
- Data related to product cluster(s) to which one or more of the products of interest belong.

Coming back to Figures 1 and 2, the AI processing unit 4 may be configured to use the generated information vector of product sale features to generate a prediction of sales for the one or more products of interest based on the output of a prediction model to which the information vector of product sale features is input.

Depending on the embodiment, the proposed method may be configured to generate a prediction of sales for the product of interest over a time horizon that may or may not correspond to the number of time units of the time segments used by the method as input data. For example, the proposed method may use time segments of 20 weeks as input data, and the prediction model may be configured to generate a prediction of sales of the product over a 20-week long time horizon in the future. Different time unit granularities may also be used between the input data and the output data generated by the prediction model. Preferably, the time granularity used for input data may be chosen finer than the time granularity used for output data. For example, input data may be processed for a number of weeks, and output data may be generated for a number of weeks or months, AS another example, input data may be processed for a number of days, and output data may be generated for a number of days, weeks or months.The prediction model may be chosen based on results obtained with training information vectors of product sale features used for training each of a plurality of candidate prediction models during a prediction model qualification phase, as described below.

It will be appreciated by those having ordinary skill in the relevant art that any suitable prediction model or artificial intelligence algorithm for predicting sales based on an information vector of product sale features, such as, for example, a Recurrent neural network (RNN)-based model, a General Additive Model (GAM) type model, a feedforward artificial *neural network* (ANN)-based model, a multilayer perceptron (MLP) type neural network based model, or a Random Forest+ XG Boost type model, may be used as prediction model in one or more embodiments of the present subject disclosure.

In one or more embodiments, a prediction model qualification phase may be performed, during which a plurality of prediction model training phases may be performed for a plurality of respective candidate prediction models, which may for example comprise a RNN-based model, a GAM type model, a MLP-based model, and a WG Boost type model.

Based on the results of the prediction model training phases, a candidate prediction model may be selected among the plurality of candidate prediction models as the prediction model to be used for generating a prediction of sales for the one or more products of interest at the one or more points of sale of interest by providing the generated information vector of product sale features as input of the prediction model.

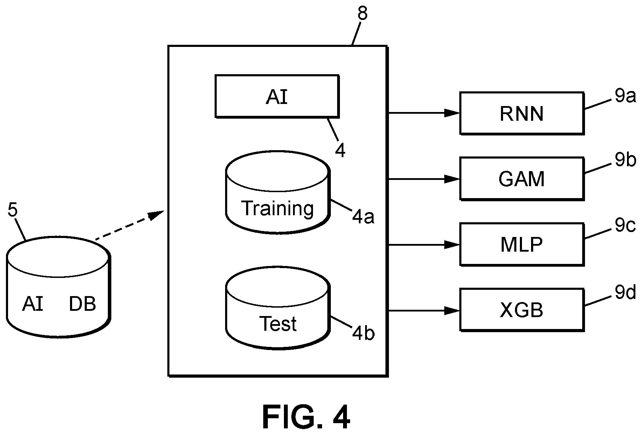

Figure 4 illustrates an exemplary computing architecture for performing a training phase for training one or more prediction models according to one or more embodiments.

Shown on Figure 4 is an AI training computing environment 8, which may in some embodiments be fully integrated in the AI computing environment 2 illustrated on Fig. 1, configured for receiving data from an AI database 5, which may be the AI database illustrated on Fig. 1. The AI training computing environment 8 may comprise an AI processing unit 4, such as the one illustrated on Fig. 1, an AI training data database 4a and an AI test data database 4b. The AI training computing environment 8 may be configured to input training data to each of a plurality of candidate prediction models, such as, for example, a RNN-based prediction model 9a, a GAM type prediction model 9b, a MLP prediction model 9c, and a Random Forest+ XG Boost prediction model 9d.

In one or more embodiments, the training phase may initially comprise operations that are similar to the ones described above with respect to collecting data and formatting collected data to be input to a prediction model, as it may comprise the generating a first time series associated with the first product sale feature, the first time series comprising product sales data related to sales of the one or more products of interest at the one or more points of sale of interest per the first time unit (e.g. per week) over a past historic duration expressed in the first time unit (e.g. for a past historic duration of NTOT weeks, with NTOT being equal for example to 156).

A portion of the past historic duration (e.g. the first 70%, that is, data corresponding to the time units (e.g. weeks) comprised in 70% of the past historic duration, starting from the oldest data) may be selected in order to perform the training phase of one or more candidate prediction models, while data corresponding to the remaining of the past historic duration may be reserved for a test phase for selecting the candidate prediction model among several candidate models showing the best performances.

Choosing a past historic duration of 156 weeks or of a number of weeks of the same order of magnitude advantageously allows performing a training phase with training data and a test phase with test data that span a sufficiently long time horizon for ensuring good performances when in operational phase, assuming that the operational phase may use time series corresponding to a first predetermined duration of a number of weeks in the order of magnitude of 20 weeks. For example, the proposed training phase may be implemented using training data vectors of training data that comprise training data for the past corresponding to 20 weeks and training data for the future that also correspond to 20 weeks. Using a past historic duration of 156 weeks may then allow generating 156 - 40 + 1 = 117 training data vectors. Said otherwise, a sliding window of 40 data points may be used over a 156 past historic duration on 117 time positions on an time axis spanning from 0 to 155. The first vector, corresponding to the time window first position on the axis, may comprise data corresponding to time positions 0 to 39 on the axis, while the last vector, corresponding to the time window last position on the axis, may comprise data corresponding to time positions 116 to 155 on the axis.

In one or more embodiments, TRP% of the past historic duration may be reserved for performance of the training phase, that is, data corresponding to TRP% of the sequence of time units corresponding to the past historic duration may be used for the training phase. This sub-sequence of the sequence of time units corresponding to the past historic duration may be referred to as the "training phase sub-sequence". For example, data corresponding to 70 % of a sequence of 156 weeks, i.e. data corresponding to the first 109 weeks of the sequence, may be reserved to be used for the training phase.

In one or more embodiments, the training phase may further comprise the generating of one or more second time series respectively associated with the one or more second product sale features, the second time series each comprising context data associated with product sale history for one or more of the products of interest and/or one or more of the points of sale of interest over a past historic duration expressed in the first time unit and of the length of the training phase subsequence (e.g. 109 weeks).

The training phase may then be performed based on data collected and formatted to generate a training phase subsequence of data corresponding to a sequence of NTRP time units (e.g. weeks) (*wₖ*)_{*k*=1,...,*NTRP*}, which may be referred to as the training phase sequence of time units. The training phase subsequence may comprise data of the portion of the first time series and of the one or more second time series corresponding to the training phase sequence of time units (*wₖ*)_{*k*=1,...,}*_{NTRP}.* The portion of the first time series and of the second time series may be referred to as training phase first time series and training phase second time series, respectively. In one or more embodiments, such training phase first time series and training phase second time series may contain the data of the first time series and the second time series, respectively, however limited to that corresponding to the training phase sequence of time units (*wₖ*)_{*k*=1,...,}*_{NTRP}.*

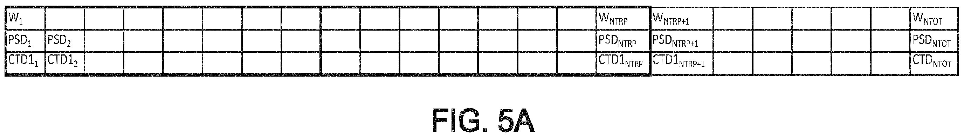

Figure 5A illustrates an exemplary first time series of product sale data (*PSDₖ*)_{*k*=1,...,*NTOT*} synchronized with a second time series of context data (*CTD1ₖ*)_{*k*=1,...,*NTOT*} through a common alignment with a sequence of time units (e.g. weeks) (*wₖ*)_{*k=*1,...,}*_{NTOT}.* As illustrated on Fig. 5A, a training phase sequence of time units (*wₖ*)_{*k*=1,...,*NTRP*}, a training phase first time series of product sale data (*PSDₖ*)_{*k*=1,...,*NTRP*}, and a training phase second time series of context data (*CTD*1*ₖ*)_{*k*=1,...,*NTRP*}, can be extracted from each of the sequence of time units (*wₖ*)_{*k*=1,...,*NTOT*}, the first time series of product sale data (*PSDₖ*)_{*k*=1,...,*NTOT*}, and the second time series of context data (*CTD*1*ₖ*)_{*k*=1,...,*NTOT*}, by taking the data corresponding for each time series to the NTRP first time units of the sequence of time units (*wₖ*)_{*k*=1,...,}*_{NTOT}.*

In one or more embodiments, the training phase may further comprise the generating a sequence of successive time slices, each of a first predetermined duration expressed in the first time unit (e.g. 20 weeks). In some embodiments, an initial time slice of the sequence of time slices may start at an initial time of the past historic duration (e.g. corresponding to the first time unit (e.g. week) thereof), and a last time slice of the sequence of time slices ends at or before a final time of the past historic duration, and each time slice of the sequence of time slices but the last time slice is offset to the next time slice in the sequence by at least one first time unit (e.g. by at least one week).

In one or more embodiments, the first time series and the one or more second time series may be synchronized based on the first time unit, which may for example be a week. For example, for each unit of a sequence of NTOT units (NTOT being equal for example to 156), data of the first time series and of the one or more second time series corresponding to the same unit may be associated. The first time series and one or more second time series may then be divided into respective data sequences corresponding to a subset of NTRP units in the sequence of NTOT units (for example NTRP consecutive weeks in the sequence of NTOT weeks) on the one hand, and the remaining units of the sequence of NTOT units on the other hand. The time slices may then be defined based on the subset of NTRP units that are used for the training phase.

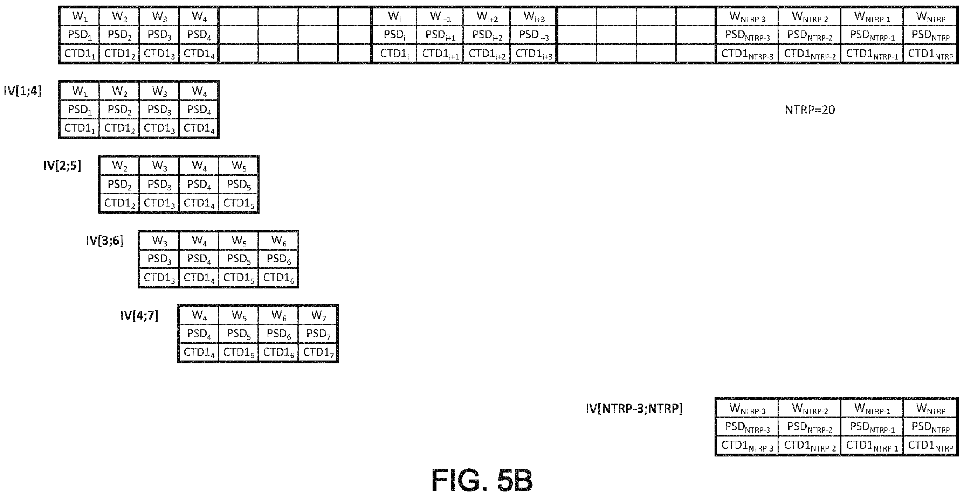

Figure 5B illustrates an exemplary sequence {[*wᵢ*, *w*_{*i*+1},*w*_{*i*+2}, *w*_{*i*+3}]}_{*i*=1,...,*NTRP-*3} of overlapping time slices [w₁,w₂,w₃,w₄], [w₂,w₃,w₄,w₅], [w₃,w₄,w₅,w₆], [w₄,w₅,w₆,w₇], ..., [w_{NTRP-3},w_{NTRP-2},w_{NTRP-1},w_{NTRP}] that can be generated based on the training phase sequence of time units (e.g. weeks) (*wₖ*)_{*k*=1,...,}*_{NTRP}.* In the illustration of Fig. 5B, each time slice corresponds to four units, and is offset with the following time slice in the sequence of time slices by one unit.

In one or more embodiments, the training phase may further comprise, for each of the first time series and the one or more second time series (in the example of Fig. 5B, for each of the training phase first time series of product sale data (*PSDₖ*)_{*k*=1,...,*NTRP*} and the training phase second time series of context data (*CTD1ₖ*)_{*k*=1,...,*NTRP*}), the generating a sequence of successive time segments (in the example of Fig. 5B, a sequence of time segments of product sale data {[*PSDᵢ*, *PSD*_{*i*+1}, *PSD*_{*i*+2}, *PSD*_{*i*+3}]}_{*i*=1,...,*NTRP*-3} and a sequence of time segments of context data {[*CTD*1*ᵢ*, *CTD*_{*i*+1}, *CTD*1_{*i*+2}, *CTD*1_{*i*+3}]}_{*i*=1,...,*NTRP*-3}), based on respective data of the first time series and the one or more second time series, wherein each time segment corresponds to a time slice in the sequence of successive time slices.

In one or more embodiments, a training phase performed for a candidate prediction model may further include a vector generation loop, each training iteration of which may be performed on a current time slice. The vector generation loop may be initialized with a first iteration performed for the first time slice of the sequence of successive time slices, and may be stopped after completing a last iteration performed for the last time slice of the sequence of successive time slices.

For each iteration (corresponding to a current time slice), a first current time segment corresponding to the first time series for the current time slice may be combined with one or more second current time segments respectively corresponding to the second time series for the current time slice, to generate a current information training input vector of product sale features.

For purposes of training the candidate prediction model, a current information training output vector of product sale features may also be generated, for example by combining a first offset current time segment corresponding to the first time series with one or more second offset current time segments, with the first offset current time segment and the one or more second offset current time segments corresponding to a first offset current slice which is offset from the current time slice by a predetermined training offset. The predetermined training offset may advantageously be chosen based on the size of the current time slice, and may for example be equal to the size of the current time slice. The candidate prediction model may be trained based on the current information training input vector of product sale features, and on the current information training output vector of product sale features. For example, the current information training input vector of product sale features and the corresponding information training output vector of product sale features may be input to the candidate prediction model, which may learn its prediction algorithm through its output compared with the current information training output vector of product sale features that was provided.

For example, referring to Fig. 5B, the first iteration of the vector generation loop according to one or more embodiments may comprise combining the time segment of product sale data [*PSD*₁, *PSD*₂, *PSD*₃, *PSD*₄] with the time segment of context data [*CTD*1₁, *CTD*1₂, *CTD*1₃, *CTD*1₄] to generate a first training input vector of product sale features *Tr_IV*₁*.* The output vector *Tr_OV*₁ may also be generated by combining the time segment of product sale data [*PSD*₅, *PSD*₆, *PSD*₇, *PSD*₈] corresponding to a time offset equal to the size of a time slice (in the example of Fig. 5B, 4 weeks), with the time segment of context data [*CTD*1₅,*CTD*1₆,*CTD*1₇,*CTD*1*₈*] to which the same time offset is applied. The candidate prediction model may then use the training input vector of product sale features *Tr_IV*₁ as input vector to process data of the training input vector of product sale features *Tr_IV*₁, and generate its prediction algorithm based on its results and the known results provided by the training output vector of product sale features *Tr_0V*₁*.*

Likewise, for an i-th iteration, the time segment of product sale data [*PSDᵢ*, *PSD*_{*i*+1}, *PSD*_{*i*+2}, *PSD*_{*i*+3}] may be combined with the time segment of context data [*CTD*1*ᵢ*, *CTD*1_{*i*+1}, *CTD*1_{*i*+2}, *CTD*1_{*i*+3}] to generate a first training input vector of product sale features *Tr_IVᵢ*. The output vector *Tr_OVᵢ* may also be generated by combining the time segment of product sale data [*PSD*_{*i*+4}, *PSD*_{*i*+5}, *PSD*_{*i*+6}, *PSD*_{*i*+7}] corresponding to a time offset equal to the size of a time slice (in the example of Fig. 5B, 4 weeks), with the time segment of context data [*CTD*1_{*i*+4}, *CTD*1_{*i*+5}, *CTD*1_{*i+*6}, *CTD*1_{*i*+7}] to which the same time offset is applied. The candidate prediction model may then use the training input vector of product sale features *Tr_IVᵢ* as input vector to process data of the training input vector of product sale features *Tr_IVᵢ*, and generate its prediction algorithm based on its results and the known results provided by the training output vector of product sale features *Tr_OVᵢ*.

The training phase performed for a candidate prediction model may be followed in one or more embodiments by a test phase aimed at measuring performances of the trained candidate prediction model.

Collected data corresponding to the past historic duration, and not used during the training phase, may advantageously be used for the test phase. In particular, the time series (e.g. the first time series associated with the first product sale feature and comprising product sales data related to sales of the one or more products of interest at the one or more points of sale of interest per the first time unit (e.g. per week) over the past historic duration expressed in the first time unit) generated and not used during the training phase may be used for the test phase.

In one or more embodiments, TP% of the past historic duration may be reserved for performance of the test phase, that is, data corresponding to TP% of the sequence of time units (e.g. weeks) corresponding to the past historic duration may be used for the test phase. This sub-sequence of the sequence of time units corresponding to the past historic duration may be referred to as the "test phase sub-sequence". For example, data corresponding to 30 % of a sequence of 156 weeks, i.e. data corresponding to the last 47 weeks of the sequence, may be reserved to be used for the test phase.

In other embodiments, data corresponding to the past historic duration may be partitioned in three subsets, respectively corresponding to three subsets of consecutive time units forming a partition of the past historic duration. For example, the past historic duration may be partitioned into a so-called "training subset", a so-called "development subset", and a so-called "test subset". For example, as described above, the training subset may correspond to the TRP% first time units (e.g. weeks) of the past historic duration, and the test subset may correspond to the TP% last time unitse of the past historic duration.

The development subset may correspond to the sub-sequence of time units in between the last time unit of the training subset and the first time unit of the test subset, and may advantageously be used in order to avoid introducing a bias in the test phase with data corresponding to the last time units of the training subset that may be used for the training phase. The size of the development set, for example expressed as a number of weeks, may advantageously be chosen to correspond to the size of a time slice used for the training phase as described above. For example, the size of the development set may be of the order of 20 weeks in embodiments which use 20-week long time slices.

In one or more embodiments, the test phase may therefore use a portion (e.g. TP%) of a first time series associated with the first product sale feature, the first time series comprising product sales data related to sales of the one or more products of interest at the one or more points of sale of interest per the first time unit (e.g. per week) over a past historic duration expressed in the first time unit (e.g. for a past historic duration of NTOT weeks, with NTOT being equal for example to 156).

In one or more embodiments, the test phase may further use a portion (e.g. TP%) of one or more second time series respectively associated with the one or more second product sale features, the second time series each comprising context data associated with product sale history for one or more of the products of interest and/or one or more of the points of sale of interest over a past historic duration expressed in the first time unit and of the length of the test phase subsequence (e.g. 109 weeks). Depending on the embodiment, each of the one or more second time series may be generated before performing the test phase, before performing the training phase, or at the onset of the test phase.

The test phase may then be performed based on data collected and formatted to generate a test phase subsequence of data corresponding to a sequence of NTP time units (e.g. weeks) (*wₖ*)_{*k*=1,...,*NTP*}, which may be referred to as the test phase sequence of time units. The test phase subsequence may comprise data of the portion of the first time series and of the one or more second time series corresponding to the training phase sequence of time units (*wₖ*)_{*k*=1,...,}*_{NTP}.* The portion of the first time series and of the second time series may be referred to as test phase first time series and test phase second time series, respectively. In one or more embodiments, such test phase first time series and test phase second time series may contain the data of the first time series and the second time series, respectively, however limited to that corresponding to the test phase sequence of weeks (*wₖ*)_{*k*=1,...,}*_{NTP}.*

In one or more embodiments, the training phase may further comprise, for each of the first time series and the one or more second time series, the generating a sequence of successive time segments, based on respective data of the first time series and the one or more second time series, wherein each time segment corresponds to a time slice in a sequence of successive time slices.

In one or more embodiments, a test phase performed for a candidate prediction model may further include a vector generation loop, each test iteration of which may be performed on a current time slice. The vector generation loop may be initialized with a first iteration performed for the first time slice of the sequence of successive time slices, and may be stopped after completing a last iteration performed for the last time slice of the sequence of successive time slices.

For each iteration (corresponding to a current time slice), a first current time segment corresponding to the first time series for the current time slice may be combined with one or more second current time segments respectively corresponding to the second time series for the current time slice, to generate a current information training input vector of product sale features.

For purposes of testing the candidate prediction model, a current information testing output vector of product sale features may also be generated, for example by combining a first offset current time segment corresponding to the first time series with one or more second offset current time segments, with the first offset current time segment and the one or more second offset current time segments corresponding to a first offset current slice which is offset from the current time slice by a predetermined test offset (which may be chosen equal to the training offset). The predetermined test offset may advantageously be chosen based on the size of the current time slice, and may for example be equal to the size of the current time slice. The candidate prediction model may be tested based on the current information test input vector of product sale features, and on the current information testing output vector of product sale features. For example, the current information testing input vector of product sale features may be input to the candidate prediction model, and the output generated by the candidate prediction model based on the current information testing input vector of product sale features may be compared to determine a performance measurement (for example in the form of an error rate) of the candidate prediction model.

Towards the end of the past historic duration, the output data generated by the candidate prediction model that will not be used as input data may be set to a predetermined default value. For example, in embodiments in which a sliding window of 40 data points is used over a 156 past historic duration, the output data generated based on positions of the first value of the sliding window beyond the last value of the past historic duration may be set to a predetermined value, e.g. representing a N/A data point (non usable output data).

Different performance measurements obtained for respective candidate prediction models may be used for selecting a prediction model to be used when implementing the proposed methods according to one or more embodiments.

While the invention has been described with respect to preferred embodiments, those skilled in the art will readily appreciate that various changes and/or modifications can be made to the invention without departing from the spirit or scope of the invention as defined by the appended claims.

Although this invention has been disclosed in the context of certain preferred embodiments, it should be understood that certain advantages, features and aspects of the systems, devices, and methods may be realized in a variety of other embodiments. Additionally, it is contemplated that various aspects and features described herein can be practiced separately, combined together, or substituted for one another, and that a variety of combination and sub-combinations of the features and aspects can be made and still fall within the scope of the invention. Furthermore, the systems and devices described above need not include all of the modules and functions described in the preferred embodiments.

Information and signals described herein can be represented using any of a variety of different technologies and techniques. For example, data, instructions, commands, information, signals, bits, symbols, and chips can be represented by voltages, currents, electromagnetic waves, magnetic fields or particles, optical fields or particles, or any combination thereof.

Depending on the embodiment, certain acts, events, or functions of any of the methods described herein can be performed in a different sequence, may be added, merged, or left out all together (e.g., not all described acts or events are necessary for the practice of the method). Moreover, in certain embodiments, acts or events may be performed concurrently rather than sequentially.

## Claims

1. A computer-implemented method of managing product data comprising:
• generate a first time segment associated with a first product sale feature, the first time segment comprising product sales data related to sales of the product at a point of sale per a first time unit over a first time period in the past starting on a current time and of a first predetermined duration expressed in the first time unit, and one or more second time segments respectively associated with one or more second product sale features, the second time segments each comprising context data associated with product sale history and/or the point of sale over the first time period in the past;
• combine the first time segment with the one or more second time segments to generate an information vector of product sale features; and
• generate a prediction of sales for the product at the point of sale based on the output of a prediction model to which the information vector of product sale features is input.

2. The method of claim 1, further comprising a prediction model qualification phase, the prediction model qualification phase comprising:
• performing a plurality of prediction model training phases using a plurality of respective candidate prediction models;
• selecting a candidate prediction model as the prediction model based on results of the prediction model training phases.

3. The method of any of the preceding claims, further comprising a prediction model training phase, the prediction model training phase comprising:
- generate a first time series associated with the first product sale feature, the first time series comprising product sales data related to sales of the product at the point of sale per the first time unit over a past historic duration expressed in the first time unit;
- generate one or more second time series respectively associated with the one or more second product sale features, the second time series each comprising context data associated with product sale history and/or the point of sale over the past historic duration expressed in the first time unit;
- for each of the first time series and the one or more second time series, generating a sequence of successive time segments, based on respective data of the first time series and the one or more second time series, wherein each time segment corresponds to a time slice of a first predetermined duration expressed in the first time unit in a sequence of successive time slices, wherein an initial time slice of the sequence of time slices starts at an initial time of the past historic duration, and a last time slice of the sequence of time slices ends at a final time of the past historic duration, and each time slice of the sequence of time slices but the last time slice is offset to the next time slice in the sequence by one first time unit;
- running training iterations of a vector generation loop, based on a current time slice which is incremented by an increment, wherein the vector generation loop is initiated with the current time slice set to the initial time slice of the past historic duration and stopped when the current time slice is set to a predetermined training phase time slice of the past historic duration, the method comprising, for each training iteration:
∘ combine a first current time segment corresponding to the first time series with one or more second current time segments to generate a current information input vector of product sale features, wherein the first current time segment and the one or more current time segments correspond to the current time slice;
∘ combine a first offset current time segment corresponding to the first time series with one or more second offset current time segments to generate a current information output vector of product sale features, wherein the first current time segment and the one or more current time segments correspond to the current time slice, and wherein the first offset current time segment and the one or more second offset current time segments correspond to a first offset current slice which is offset from the current time slice by a predetermined training offset;
train the prediction model based on the current information input vector of product sale features, and on the current information output vector of product sale features.

4. The method of claim 3, further comprising:
- running test iterations of the vector generation loop, based on a test current time slice which is incremented by a test phase increment after each iteration, wherein the vector generation loop is initiated with the test current time slice set to a test initial time slice which is offset from the predetermined training phase time slice by one first time unit and stopped when the test current time slice is set to the last time slice of the sequence of time slices, the method comprising, for each test iteration:
∘ combine a third current time segment corresponding to the first time series with one or more fourth current time segments to generate a current information test input vector of product sale features, wherein the third current time segment and the one or more fourth current time segments correspond to the current time slice;
∘ combine a third offset current time segment corresponding to the first time series with one or more fourth offset current time segments to generate a current information test output vector of product sale features, wherein the third offset current time segment and the one or more fourth offset current time segments correspond to a second offset current slice which is offset from the test current time slice by a predetermined test offset;
∘ generate a test output of the prediction model by running the prediction model with the current information test input vector of product sale features as input;
∘ calculate a test prediction error based on a comparison of the test output of the prediction model with the current information test output vector of product sale features;
update the prediction model based on the test prediction error.

5. The method of any of the preceding claims, wherein the information vector of product sale features comprises:
• a first data series of aggregate sales of the product at the point of sale per the first time unit over a first time period in the past starting on a current time and of the first predetermined duration;
• a second data series of aggregate sales of the product per a second time unit over a second time period in the past starting on the current time and of a second predetermined duration expressed in the second time unit;
• a first derivative data series of first derivatives of the first data series;
• a second derivative data series of second derivatives of the first data series;
• a third derivative data series of first derivatives of the second data series;
• a fourth derivative data series of second derivatives of the second data series;
• a third data series of promotions for sale of the product at the point of sale per the first time unit over the first time period in the past starting on the current time.

6. The method of claim 5, wherein the information vector of product sale features further comprises:
• a fourth data series of forecast promotions for sale of the product at the point of sale per the first time unit over the first time period in the future from the current time.

7. The method of any of claims 5 or 6, wherein the information vector of product sale features further comprises:
• a fifth data series of weather data at the point of sale per the first time unit over the first time period in the past starting on the current time.

8. The method of any of claims 5 to 7, wherein the information vector of product sale features further comprises:
• a sixth data series of weather data at the point of sale per the first time unit over the first time period in the future from the current time.

9. The method of any of claims 5 to 8, wherein the information vector of product sale features further comprises:
• a seventh data series of weather data at the point of sale per the second time unit over a third time period in the future from the current time and of a third predetermined duration expressed in the second time unit.

10. The method of any of claims 5 to 9, wherein the information vector of product sale features further comprises:
• a eighth data series of calendar data at the point of sale per the first time unit over the first time period in the past starting on the current time.

11. An apparatus, the apparatus comprising a processor and a memory operatively coupled to the processor, wherein the apparatus is configured to perform a method according to any of claims 1 to 10.

12. A non-transitory computer-readable medium encoded with executable instructions which, when executed, causes an apparatus comprising a processor operatively coupled with a memory, to perform a method according to any of claims 1 to 10.

13. A computer program product comprising computer program code tangibly embodied in a computer readable medium, said computer program code comprising instructions to, when provided to a computer system and executed, cause said computer to perform a method according to any of claims 1 to 10.

14. A data set representing, for example through compression or encoding, a computer program according to claim 13.
